(19) Europäisches Patentamt / European Patent Office / Office européen des brevets

(11) **EP 2 629 070 A1**

(12) **EUROPEAN PATENT APPLICATION**

(43) Date of publication:
**21.08.2013 Bulletin 2013/34**

(51) Int Cl.:
**G01G 19/08** (2006.01)

(21) Application number: **13153172.5**

(22) Date of filing: **30.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.02.2012 SE 1250144**

(71) Applicant: **Scania CV AB
151 87 Södertälje (SE)**

(72) Inventor: **Karlsson, Jan
635 06 Eskilstuna (SE)**

(54) **Device and method for determination of load supported by a bogie configuration of a vehicle**

(57)    The invention relates to a method for determination of load supported (F) by a bogie configuration (299) of a vehicle (100; 110), where said bogie configuration (299) comprises twin wheelshafts (260a, 260b) resiliently supported by a spring device (220). The method comprises the step of determining a spring state in the form of an angle ($\alpha$, $\beta$) for each of said wheelshafts (260a, 260b) as a basis for determination of said load (F). The method comprises also the steps of determining an angle indication (A) based on the two angles ($\alpha$, $\beta$) thus determined, and determining said load (F) on the basis of said angle indication (A).

The invention relates also to a computer programme product comprising programme code (P) for a computer (200; 210) for implementing a method according to the invention. The invention relates also to a device (299) for determination of load supported (F) by a bogie configuration of a vehicle (100; 110), and to a motor vehicle (100; 110) equipped with the device.

Fig. 3b

EP 2 629 070 A1

**Description**

TECHNICAL FIELD

The present invention relates to a method for determination of load supported by a bogie configuration of a vehicle, where said bogie configuration comprises twin wheelshafts supported resiliently by a leaf spring. The invention relates also to a computer programme product comprising programme code for a computer for implementing a method according to the invention. The invention relates also to a device for determination of load supported by a bogie configuration of a vehicle and to a motor vehicle equipped with the device.

BACKGROUND

Certain of today's vehicles are equipped with a weighing system adapted to providing information about vehicle weight and total weight, i.e. a weight measurement which comprises both vehicle weight and cargo weight. These weighing systems may for example be used on heavy vehicles, e.g. trucks.

In certain applications it is important to be able to determine a weight of freight which is to be carried by a truck. In a first example it is desirable during loading to be able to determine whether the truck is fully laden or whether there is capacity for carrying further cargo. In a second example it is desirable to be able to determine how great a weight of freight has been placed on board the vehicle. In a third example it is desirable to continuously supply information about a prevailing weight of cargo to a control system of the vehicle, in which case suitable control algorithms may be used for operating the vehicle. Said algorithms may for example relate to controlling an engine and/or transmission and/or brakes of the vehicle.

Vehicles equipped with at least one bogie configuration and leaf springs are provided with angle sensors to determine the leaf spring defection in the form of an angle for each of the wheelshafts of the bogie configuration as a basis for determining the vehicle's load. These angles are referred to respectively as a first angle and a second angle. These angle sensors may in one version be accelerometers situated at the respective ends of the leaf springs. They are adapted to sending signals to a control unit which contain information about a prevailing angle of the leaf spring relative to a horizontal plane for a respective wheelshaft. In principle, reference angles are determined for a vehicle respectively unladen and fully laden, making it possible to determine the vehicle's load by detection of intermediate angles.

The current way in which the load supported by a vehicle's bogie configuration which comprises two wheelshafts resiliently supported by a leaf spring is by calculating a load for one bogie axle on the basis of said first angle, and a load for the other bogie axle on the basis of said second angle. The separately calculated loads are summated to arrive at said load supported by the bogie configuration.

This method currently works satisfactorily but in certain situations its accuracy may be less than desired, causing a number of disadvantages, e.g. impaired operation of the vehicle or incorrectly determined weight of its load.

An example of such a situation is where the surface on which the vehicle is standing is uneven and the wheelshafts of the bogie configuration are at different heights. A change of angle per kg of load will then differ from one wheelshaft to the other in cases where fastenings between wheelshaft and leaf spring are not symmetrical relative to a pivot point of the bogie configuration.

Another example of such a situation is where fastenings between wheelshaft and leaf spring are not symmetrical relative to a pivot point of the bogie configuration, which is relatively commonly the case and makes it impossible in particular to achieve better rotation of a rear wheelshaft of the bogie configuration.

SUMMARY OF THE INVENTION

There is therefore a need for a method for determination of load supported by a bogie configuration of a vehicle which does not entail the above disadvantages and is not affected by said situations.

An object of the present invention is to propose a novel and advantageous method for determination of load supported by a bogie configuration of a vehicle.

Another object of the invention is to propose a novel and advantageous device and a novel and advantageous computer programme for determination of load supported by a bogie configuration of a vehicle.

A further object of the invention is to propose a method, a device and a computer programme for achieving a more reliable and versatile method for determination of load supported by a bogie configuration of a vehicle.

A further object of the invention is to propose an alternative method, an alternative device and an alternative computer programme for determination of load supported by a bogie configuration of a vehicle.

These objects are achieved with a method according to claim 1.

One aspect of the invention is a proposed method for determination of load supported by a bogie configuration of a vehicle, where said bogie configuration comprises twin wheelshafts resiliently supported by a spring device, comprising the steps of

- determining a spring state in the form of an angle for each of said wheelshafts as a basis for determination of said load,
- determining an angle indication based on the two angles thus determined, and
- determination of said load on the basis of said angle indication.

The result is a more correct determination of load supported by a bogie configuration of a vehicle, making it possible to cater for uneven surface and for asymmetry of fastenings of wheelshafts and leaf springs relative to a pivot unit of the bogie configuration.

Said spring device may be a leaf spring. It may be a coil spring configuration. It may be made of any suitable material.

Said angle indication may be an average of the two angles determined, resulting in a method whereby load supported can be determined in a more reliable way. The result is a method which can compensate for uneven surface and for asymmetry of fastenings of wheelshafts and leaf springs relative to a pivot point of the bogie configuration.

Said angle indication may be a weighted average of the two angles determined, resulting in a method whereby load supported can be determined in a more reliable way. The result is a method which can compensate for uneven surface and for asymmetry of fastenings of wheelshafts and leaf springs relative to a pivot point of the bogie configuration.

The method may further comprise the step of determining for each of said wheelshafts an individual constant which represents a deflection in the form of a change of angle due to load. This means that a force component can be determined for each wheelshaft in a more correct way. The result is a method which can compensate for uneven surface and for asymmetry of fastenings of wheelshafts and leaf springs relative to a pivot unit of the bogie configuration. It is advantageous to have initially to determine only said individual constants. The advantageous result is a relatively quick method for subsequent determination of said load supported.

The method may alternatively comprise the step of determining for each of said wheelshafts an individual constant which represents coil spring compression in the form of a change of angle due to load. This means that a force component can be determined for each wheelshaft in a more correct way. The result is a method which can compensate for uneven surface and for asymmetry of fastenings of wheelshafts and leaf springs relative to a pivot unit of the bogie configuration. It is advantageous to have initially to determine only said individual constants. The advantageous result is a relatively quick method for subsequent determination of said load supported.

The method may further comprise the step of determination of said load supported on the basis of leaf spring deflection on an unladen vehicle. This means that a force component for the respective wheelshaft can be determined in a simple way using no great amount of computer resources. Said deflection may correspond to a respective angle of the leaf spring at its ends when the vehicle is carrying no freight. Said angles may be stored in a control unit of the vehicle. It is advantageous to initially have only to determine said leaf spring deflection on an unladen vehicle. The advantageous result is a relatively quick method for subsequent determination of said load supported.

The method may further comprise the step of determination of said load supported on the basis of said angle indication in the form of an average value of the two angles determined, said individual constants determined and said leaf spring deflection on an unladen vehicle, resulting in a method whereby load supported can be determined in a more reliable way. The result is a method which can compensate for uneven surface and for asymmetry of fastenings of wheelshafts and leaf springs relative to a pivot point of the bogie configuration. The advantageous result is a reliable and robust method for determination of said load supported. Determining at a given time an average value of the two angles determined and using the previously determined individual constants and the leaf spring deflection on an unladen vehicle results in time-efficient and accurate determination of said load supported.

An aspect of the present invention is a proposed method comprising the step of determining the total load supported by the vehicle by adding together a load supported by all of the vehicle's bogie configurations and a load supported by the vehicle's other wheelshafts.

A total load supported by the vehicle may thus be determined. A value representing the vehicle's own weight may be stored in a memory of a control unit of the vehicle and may be subtracted from said total vehicle weight determined to arrive at the weight of the freight placed on board the vehicle.

A load supported by the vehicle's other wheelshafts may be determined in any suitable way. These wheelshafts are thus not part of a bogie configuration, e.g. one such other wheelshaft may be a forward wheelshaft provided with steerable front wheels.

A vehicle may comprise a number of bogie configurations, depending on its design, which may be arranged in pairs.

The method is easy to implement in existing motor vehicles. Software for determination of load supported by a bogie configuration of a vehicle according to the invention may be installed in a control unit of the vehicle during the manufacture of the vehicle. A purchaser of the vehicle may thus have the possibility of selecting the function of the method as an option. Alternatively, software which comprises programme code for applying the innovative method for determination of load supported by a bogie configuration of a vehicle may be installed in a control unit of the vehicle on the occasion of upgrading at a service station, in which case the software may be loaded into a memory in the control unit. Implementing the innovative method is therefore cost-effective, particularly as no further components need be installed in the vehicle. Relevant hardware is currently already provided on board. The invention thus represents a cost-effective solution to the problems indicated above.

Software which comprises programme code for determination of load supported by a bogie configuration of a vehicle is easy to update or replace. Moreover, different parts of the software which comprises programme code for determination of load supported may be replaced independently of one another. This modular configuration is advantageous from a maintenance perspective.

One aspect of the device is a proposed method for determination of load supported by a bogie configuration of a vehicle, where said bogie configuration comprises twin wheelshafts resiliently supported by a spring device, comprising means for determining a spring state in the form of an angle for each of said wheelshafts as a basis for determination of said load. The device further comprises

- means for determining an angle indication based on the two angles thus determined, and
- means for determination of said load on the basis of said angle indication.

Said angle indication of the device may be an average of the two angles determined.

Said angle indication of the device may be a weighted average of the two angles determined.

The device may further comprise

- means for determining for each of said wheelshafts an individual constant which denotes a leaf spring deflection in the form of a change of angle due to load.

The device may further comprise

- means for determination of said load supported on the basis of leaf spring deflection on an unladen vehicle.

The device may further comprise

- means for determination of said load supported on the basis of said angle indication in the form of an average of the two angles determined, said individual constants determined and said leaf spring deflection on an unladen vehicle.

The above objects are also achieved with a motor vehicle which is provided with the device for determination of load supported. The vehicle may be a truck, bus or off-road vehicle.

An aspect of the invention is a proposed computer programme for determination of load supported by a bogie configuration of a vehicle, where said bogie configuration comprises twin wheelshafts resiliently supported by a spring device, which programme comprises programme code stored on a computer-readable medium for causing an electronic control unit or another computer connected to the electronic control unit to perform steps according to any one of claims 1-7.

An aspect of the invention is a proposed computer programme for determination of load supported by a bogie configuration of a vehicle, where said bogie configuration comprises twin wheelshafts resiliently supported by a spring device, which programme comprises programme code for causing an electronic control unit or another computer connected to the electronic control unit to perform steps according to any one of claims 1-7.

An aspect of the invention is a proposed computer programme product comprising a programme code stored on a computer-readable medium for performing method steps according to any one of claims 1-7 when said programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields, which are within the scope of the invention.

BRIEF DESCRIPTION OF THE DRAWINGS

For fuller understanding of the present invention and its further objects and advantages, the detailed description set out below should be read in conjunction with the accompanying drawings, in which the same reference notations denote similar items in the various diagrams, and in which:

Figure 1 schematically illustrates a vehicle according to an embodiment of the invention;

Figure 2 schematically illustrates a device of the vehicle depicted in Figure 1, according to an embodiment of the invention;

Figure 3a schematically illustrates a device of the vehicle depicted in Figure 1, according to an embodiment of the invention;

Figure 3b schematically illustrates a device of the vehicle depicted in Figure 1, according to an embodiment of the invention;

Figure 4a is a schematic flowchart of a method according to an embodiment of the invention;

Figure 4b is a more detailed schematic flowchart of a method according to an embodiment of the invention; and

Figure 5 schematically illustrates a computer according to an embodiment of the invention.

## DETAILED DESCRIPTION OF THE DRAWINGS

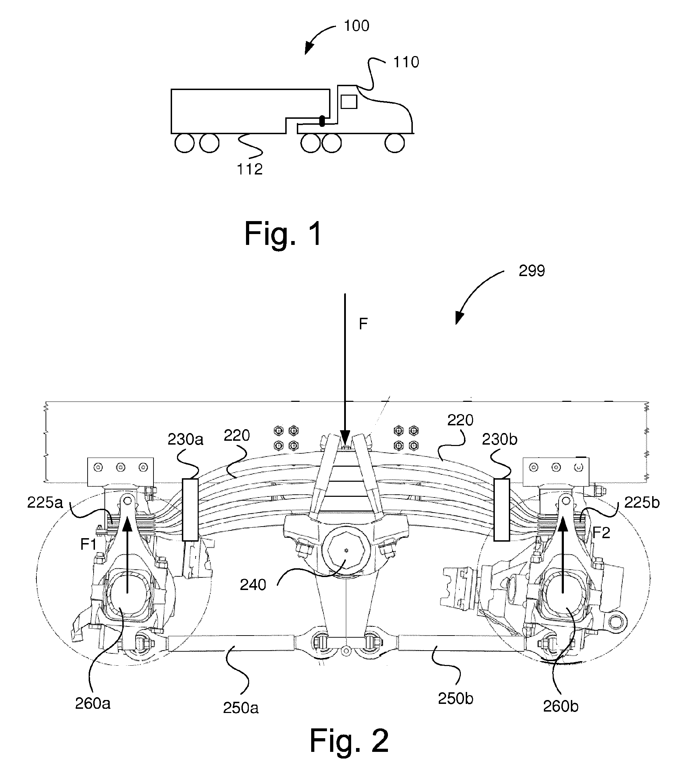

Figure 1 depicts a side view of a vehicle 100. The vehicle exemplified comprises a tractor unit 110 and a trailer 112. It may be a heavy vehicle, e.g. a truck or a bus. It may alternatively be a car. It may be a military vehicle, e.g. an off-road vehicle. It may be a utility vehicle, e.g. a vehicle suited to operating in a mine or quarry or in wooded areas. It is equipped with at least one bogie axle configuration. Thus the tractor unit 110 and/or the trailer 112 may be equipped with at least one bogie axle configuration.

The term "link" refers herein to a communication link which may be a physical connection such as an opto-electronic communication line, or a non-physical connection such as a wireless connection, e.g. a radio link or microwave link.

Figure 2 is a cross-sectional view of a device 299 for determination of load supported by a bogie configuration of a vehicle 100.

It should be noted that although it is primarily exemplified as a device for determination of load supported by a bogie configuration of a vehicle with one leaf spring, the invention is also feasible for any suitable spring configuration. However, the innovative method is based on being able to determine a spring state of a spring configuration in the form of angles by means of existing angle sensors. The innovative method is applicable on a spring configuration which comprises separate coil springs for each wheelshaft of a bogie configuration.

The device comprises a bogie configuration which has a first wheelshaft 260a and a second wheelshaft 260b. A leaf spring 220 is situated resiliently between the first wheelshaft and the second wheelshaft. The bogie configuration is journalled pivotably relative to a pivot element 240. A first strut 250a is situated between the first wheelshaft 260a and the pivot element 240. A second strut 250b is situated between the second shaft 260b and the pivot element. The leaf spring 220 is journalled by a first fastening spring 225a relative to said first wheelshaft. The leaf spring is journalled by a second fastening spring 225b relative to said second wheelshaft. Said first wheelshaft 260a may also be referred to as a forward wheelshaft, as viewed in the vehicle's direction of forward movement. Said second wheelshaft 260b may also be referred to as a rear wheelshaft, as viewed in the vehicle's direction of forward movement. Said second wheelshaft is thus not situated symmetrically in the bogie configuration with respect to said pivot element. Loading of said second wheelshaft will cause a fastening point between said second fastening spring 225b and said second wheelshaft to move further to the right in Figure 2. In other words, a wheelshaft fastening will "roll" out on the leaf spring. This means that its distance from the pivot element will not be as great as the corresponding difference for said forward wheelshaft 260a when no movement takes place. In an alternative version, the pivot element may be constantly situated asymmetrically with respect to said forward wheelshaft 260a and said rear wheelshaft 260b.

A force F which corresponds to a component of the total vehicle weight is illustrated schematically in Figure 2. This force is also referred to as load. Load comprises herein in certain respects a force component of the vehicle's own weight, i.e. the vehicle's weight in an unladen state, and a force component of the freight placed on board the vehicle.

The leaf spring 220 is adapted to changing shape in order to support the force F. The force F may be divided into components F1 and F2 for the respective first and second wheelshafts 260a and 260b.

To provide a measurement of the forces F1 and F2, there are angle sensors 230a and 230b at the respective ends of the leaf spring 220. These sensors may be accelerometers. They are adapted to determining an angle of the leaf spring at its respective ends relative to a horizontal plane.

The angle sensor 230a is herein referred to as a first angle sensor and is adapted to continuously determining a first angle $\alpha$ of the leaf spring at the first end of the leaf spring.

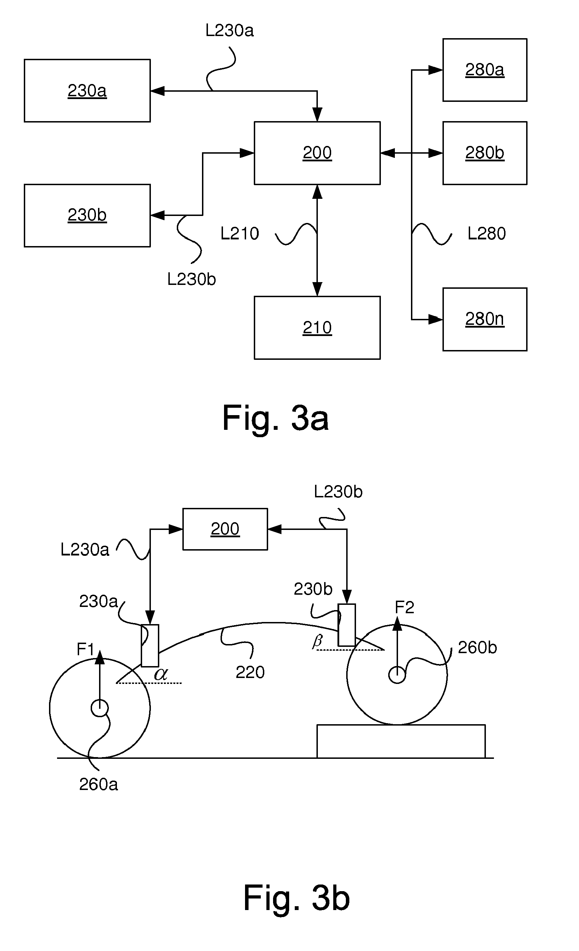

The angle sensor 230b is herein referred to as a second angle sensor and is adapted to continuously determining a second angle $\beta$ of the leaf spring at the second end of the leaf spring. This is described in more detail with reference to Figure 3b.

The angle sensors 230a and 230b are arranged for communication with a control unit of the vehicle 100, see Figure 3a.

Figure 3a depicts schematically part of the device 299 discussed with reference to Figure 2 above.

The first angle sensor 230a is adapted to continuously determining a first angle $\alpha$ at the first end of the leaf spring and to continuously or intermittently sending signals which indicate said first angle to a first control unit 200 of the vehicle via a first link L230a.

The second angle sensor 230b is adapted to continuously determining a first second $\beta$ at the second end of the leaf spring and to continuously or intermittently sending signals which indicate said second angle to the vehicle's first control unit via a second link L230b.

The first control unit is adapted in one version to using the signals received which contain information about said first angle $\alpha$ and said second angle $\beta$ as a basis for determining an angle indication A based on the two angles $\alpha$ and $\beta$ thus determined, and for determination of said load F on the basis of said angle indication.

The first control unit is adapted in one version to calculating said angle indication A as an average value Mean of the two angles $\alpha$ and $\beta$ determined.

The first control unit is adapted in one version to calculating said angle indication A as a weighted average value WMean of the two angles $\alpha$ and $\beta$ determined.

The first control unit is adapted in one version to determining for the first wheelshaft 260a an individual first constant k1 which denotes a leaf spring deflection in the form of a change of angle due to load.

The first control unit is adapted in one version to determining for the second wheelshaft 260b an individual second constant k2 which denotes a leaf spring deflection in the form of a change of angle due to load.

The first control unit is adapted in one version to determining said load supported F on the basis of a leaf spring deflection m on an unladen vehicle.

The first control unit is adapted in one version to determining said load supported F on the basis of said angle indication A in the form of an average value Mean of the two angles $\alpha$ and $\beta$ determined, said individual constants k1 and k2 determined and said leaf spring deflection m on an unladen vehicle.

The first control unit is adapted in one version to determining the total load supported Ftot by the vehicle by adding together a load supported by all of the bogie configurations and a load supported by the vehicle's other wheelshafts.

The first control unit is provided with a number of feedback means 280a-280n, where n is a positive whole number, via one or more links L280.

The first feedback means 280a comprises a VDU which may be situated in a cab of the vehicle 100 and may include a touchscreen. The first control unit 200 is arranged for communication with the VDU 280a. The first control unit is adapted to providing information comprising a prevailing load of the vehicle, which may comprise the vehicle's own weight Fown and the weight of freight placed on board. These two components may be viewed separately on the VDU.

The second feedback means 280b comprises a loadspeaker which may be situated in a cab of the vehicle 100 and may alternatively be situated on the outside of the vehicle. The first control unit 200 is arranged for communication with the loudspeaker, by means of which it is adapted to providing auditory feedback. The first control unit is adapted to using the loudspeaker to present auditory information about said prevailing load.

In one example, information about a prevailing load of the vehicle may be presented in the form of synthesised numerals. In one example, such information may be presented in the form of an acoustic signal in a situation where the vehicle is unladen or carrying half of its maximum permissible load or carrying its maximum permissible load.

In a third example, the feedback means may take the form of a lamp 260c (not depicted). In one example, information about a prevailing load of the vehicle may be presented by means of this lamp in the form of a light signal in a situation where the vehicle is unladen or carrying half of its maximum permissible load or carrying its maximum permissible load.

In a fourth example, the feedback means may take the form of a printer unit 280d (not depicted) adapted to printing information out on paper about a prevailing load of the vehicle.

The first control unit 200 is adapted to controlling said feedback means 280a-280n.

A second control unit 210 is arranged for communication with the first control unit 200 via a link L210. The second control unit may be detachably connected to the first control unit. It may be a control unit external to the vehicle 100. It may be adapted to performing the innovative method steps according to the invention. It may be used to cross-load software to the first control unit, particularly software for applying the innovative method. It may alternatively be arranged for communication with the first control unit via an internal network on board the vehicle. It may be adapted to performing substantially similar functions to those of the first control unit, e.g. using the signals received which contain information about said first angle $\alpha$ and said second angle $\beta$ as a basis for determining an angle indication A based on the two angles $\alpha$ and $\beta$ thus determined, and for determination of said load F on the basis of said angle indication.

Figure 3b depicts schematically a bogie configuration when the vehicle 100 is stationary on an uneven surface.

It shows the angle sensors 230a and 230b situated at the ends of the leaf spring 220 and signal-connected to the first control unit 200 via respective links L230a and L230b.

The first angle sensor 230a is adapted to determining the first angle $\alpha$, the second angle sensor to determining the second angle $\beta$.

The first control unit 200 is adapted to determining a leaf spring deflection m on an unladen vehicle. This takes place when the vehicle is stationary on an even surface. The leaf spring deflection m is herein denoted by the angles $\alpha$ and $\beta$ detected, which in this example are equal, e.g. 10 degrees. It may thus be determined that m=10 degrees. The leaf spring deflection value m may be stored in a memory of the control unit.

The first control unit is adapted to determining for the first wheelshaft 260a an individual constant k1 which denotes a leaf spring deflection in the form of a change of angle due to load. This may take place when the vehicle is stationary on an uneven surface.

This is done by determining an angle $\alpha$1 of the leaf spring 220 at the first wheelshaft 260a by means of the first angle sensor 230a when the vehicle is in an unladen state. An angle $\beta$1 of the leaf spring is likewise determined at the second wheelshaft 260b by means of the second angle sensor 230b when the vehicle is in an unladen state.

This is followed by determining an angle $\alpha$2 of the leaf spring at the first wheelshaft by means of the first angle sensor when the vehicle is in a state in which a known load, e.g. a maximum permissible freight load, is applied. In cases where said known load is less than a maximum permissible load, an extrapolation procedure may be employed to make it possible to determine an angle $\alpha$2 for said maximum permissible load. An angle $\beta$2 of the leaf spring is likewise determined at the second wheelshaft 260b by means of the second angle sensor 230b when the vehicle is in a similar state.

In this example,

$$\alpha 1 = 10 \text{ degrees,}$$

$$\beta 1 = 10 \text{ degrees,}$$

$$\alpha 2 = 7 \text{ degrees,}$$

and

$$\beta 2 = 7 \text{ degrees.}$$

The constants k1 and k2 are determined by dividing the total load supported by the vehicle (i.e. its own weight Fown plus freight load) by the difference in degrees between the unladen state and the fully laden state.

If the total load supported is 30 tonnes and there is prevailing symmetry of the bogie configuration, k1 and k2 are determined as follows:

$$k1 = 30/(\alpha 1 - \alpha 2) = 30/3 = 10 \text{ tonnes/degree}$$

$$k2 = 30/(\beta 1 - \beta 2) = 30/3 = 10 \text{ tonnes/degree}$$

However, the second constant k2 needs correcting for the specific bogie configuration to compensate for the asymmetry of the wheelshafts 260a and 260b with respect to the pivot unit 240 (see Figure 2). This second constant may in one example be multiplied by a suitable factor komp. In this example the chosen factor is komp=2.

Thus a compensated second factor k2* may be determined as k2*=k2xkomp.

According to the invention, a force component F1 of the first wheelshaft 260a is determined as

$$F1 = k1((\alpha + \beta)/2 - m)$$

According to the invention, a force component F2 of the second wheelshaft 260b is determined as

$$F2=k2^*((\alpha+\beta)/2\text{-}m)$$

Thus F=F1+F2

The average $(\alpha+\beta)/2$ is herein also referred to as angle indication A and also as Mean.

In one aspect of the invention, the force component F1 of the first wheelshaft 260a and the force component F2 of the second wheelshaft 260b are determined as

$$F1=k1(W1(\alpha+\beta)/2\text{-}m)$$

$$F2=k2^*(W2(\alpha+\beta)/2\text{-}m)$$

in which W1 and W2 are constants for arriving at a weighted average, and suitable values may be chosen for them on the basis of the design and function of the bogie configuration.

The weighted average $(\alpha+\beta)/2$ is herein also referred to as angle indication A and as Wmean.

The innovative method differs from prior art in which F1 and F2 were determined on the basis of angle $\alpha$ and angle $\beta$ respectively, i.e. not on the basis of their average value Mean or weighted average value WMean.

F is the force which acts upon the bogie configuration as depicted for example in Figure 2. Ftot is the total load supported by all of the vehicle's axles, i.e. an aggregate of the loads F of all of the vehicle's bogie configurations and the loads supported by its axles other than bogie axles.

In one example where the vehicle 100 has a forward wheelshaft and a rear bogie configuration with two wheelshafts, the total load Ftot is therefore calculated as

$$Ftot=F1+F2+F3+F4+F5+F6$$

in which F1 and F2 are force components of a first bogie configuration on a first side of the vehicle, and F3 and F4 are corresponding force components on a second bogie configuration on a second side of the vehicle. The same two wheelshafts thus form part of both of the bogie configurations. The force components F5 and F6 may be determined in suitable known ways and each act upon the forward wheelshaft on their respective side of the vehicle. The forward wheelshaft thus serves as an individual wheelshaft. It is provided with a suitable springing device which may comprise any suitable springing device, e.g. a leaf spring, coil spring or air bellows.

The forces F5 and F6 correspond to the vehicle's respective force components supported by said suitable springing devices on the respective sides of the vehicle at the forward wheelshaft.

The forces F5 and F6 may for example be determined in known ways, e.g. by means of strain sensors, angle sensors or pressure sensors.

It should here be noted that the innovative method is directed towards determination of load supported by a bogie configuration of a vehicle. Force components in the case of other springing devices may be determined in suitable known ways to make it possible to determine a total load supported Ftot of the vehicle.

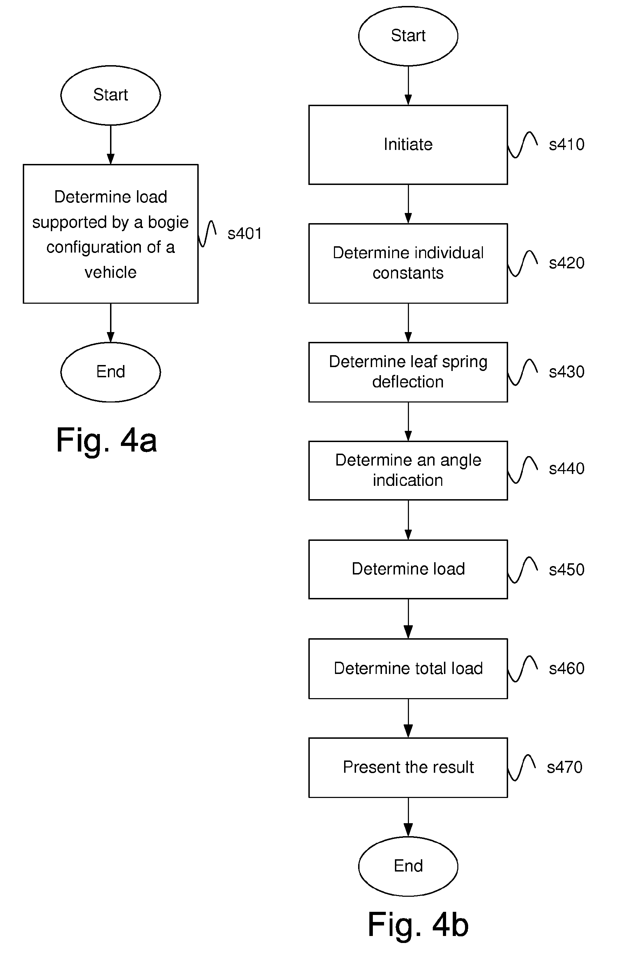

Figure 4a is a schematic flowchart of a method for determination of load supported by a bogie configuration of a vehicle, where said bogie configuration comprises twin wheelshafts resiliently supported by a spring device according to an embodiment of the invention. The method comprises a first step s401 comprising the steps of

- determining a spring state in the form of an angle for each of said wheelshafts as a basis for determination of said load,
- determining an angle indication based on the two angles thus determined, and
- determination of said load on the basis of said angle indication. The method ends after step s401.

Figure 4b is a schematic flowchart of a method for determination of load supported by a bogie configuration of a vehicle, where said bogie configuration comprises twin wheelshafts resiliently supported by a spring device, according to an embodiment of the invention.

The method comprises a first step s410 comprising the step of initiating the method for determination of load supported by a bogie configuration of a vehicle. This may be effected automatically or manually by a driver using operating means intended for the purpose, e.g. the VDU 280a. Step s410 is followed by a step s420.

Method step s420 comprises the step of determining for each of said wheelshafts 260a and 260b an individual constant k1 and k2* which denote a leaf spring deflection in the form of a change of angle due to load. Step s420 is followed by a step s430.

Method step s430 comprises the step of determining the leaf spring deflection in the form of an angle ($\alpha$, $\beta$) for each of said wheelshafts 260a, 260b as a basis for determination of said load F. This may be achieved by means of the angle sensors 230a and 230b intended for the purpose. Step s430 is followed by a step s440.

Method step s440 comprises the step of determining an angle indication A based on the two angles $\alpha$ and $\beta$ thus determined. Said angle indication may be an average value Mean of the two angles $\alpha$ and $\beta$ determined. It may alternatively be a weighted average WMean of the two angles $\alpha$ and $\beta$ determined. Step 440 is followed by a step s450.

Method step s450 comprises the step of determining load F on the basis of said angle indication A. It may comprise the step of determination of said load supported F on the basis of said angle indication in the form of the average value Mean of the two angles $\alpha$ and $\beta$ determined, said individual constants k1 and k2* determined and said leaf spring deflection m on an unladen vehicle. Step s450 is followed by a step s460.

Method step s460 comprises the step of determining the total load supported Ftot by the vehicle by adding together a load supported F by all of the bogie configurations and a load supported by the vehicle's other wheelshafts. This involves method steps s410-s450 being conducted in parallel for all of the devices for determination of load supported F by a bogie configuration of a vehicle 100. Step s460 is followed by a step s470.

Method step s470 comprises the step of presenting a result as regards said load supported F determined or preferably said total load determined Ftot supported by the vehicle. This may be effected by means of one or more of the feedback means 280a-280n. The method ends after step s470.

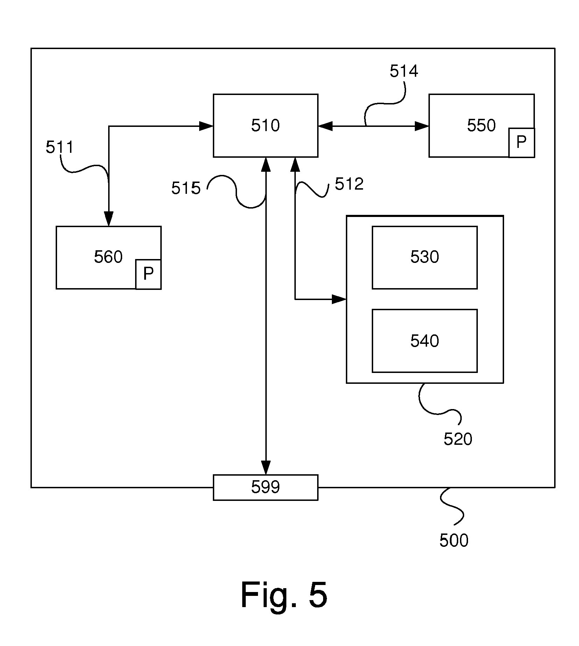

Figure 5 is a diagram of one version of a device 500. The control units 200 and 210 described with reference to Figure 2 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for determination of load supported by a bogie configuration of a vehicle according to the innovative method. This programme comprises routines for determination of leaf spring deflection in the form of an angle ($\alpha$, $\beta$) for each of the wheelshafts 260a and 260b as a basis for determination of load supported F. It comprises routines for determining an angle indication A based on the two angles ($\alpha$, $\beta$) thus determined. It comprises routines for determination of said load F on the basis of said angle indication. It comprises routines for determining for each of the wheelshafts 260a and 260b an individual constant (k1, k2) which denotes a leaf spring deflection in the form of a change of angle due to load. It comprises routines for determination of said load supported F on the basis of a leaf spring deflection m on an unladen vehicle. It comprises routines for determination of said load supported F on the basis of said angle indication A in the form of an average value Mean of the two angles ($\alpha$, $\beta$) determined, said individual constants k1 and k2* determined and said leaf spring deflection m on an unladen vehicle. It comprises routines for determining the total load Ftot supported by the vehicle by adding together a load supported by all of the bogie configurations and a load supported by the vehicle's other wheelshafts.

The programme P comprises routines for providing information about the total load Ftot supported by the vehicle and/or said load supported F. It may accordingly comprise routines for sending said information to a display for viewing of said information. It may accordingly comprise routines for sending said information to a printer for printing out on paper. It may accordingly comprise routines for sending said information to an external unit, e.g. a computer at a service site or a vehicle weighing station.

The programme P may comprise routines for continuously sending said information to a VDU in order thereby to continuously provide information about a prevailing load of a vehicle during loading/unloading of freight, e.g. gravel, refuse or timber.

The programme P may comprise routines for sending said information to a feedback unit 280a=280n, where applicable. Said feedback unit may be arranged for visual or auditory feedback of a prevailing load of the vehicle. It may be a lamp situated on an outside of the vehicle. It may be a loudspeaker situated on an outside of the vehicle.

In one example, said feedback unit may indicate a fully laden state of the vehicle. Feedback by said feedback unit may thus result in loading being halted when a maximum permissible freight load for the vehicle has been put on board.

The programme P may be stored in an executable form or in compressed form in a memory 560 and/or in a read/write memory 550.

Where the data processing unit 510 is described as performing a certain function, it means that it conducts a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The data port 599 may for example have the links L230a, L230b, L210 and L280 connected to it (see Figure 3).

When data are received on the data port 599, they are stored temporarily in the second memory element 540. When input data received have been temporarily stored, the data processing unit 510 is prepared to effect code execution as described above. In one version, signals received on the data port 599 contain information about a leaf spring deflection determined in the form of an angle ($\alpha$, $\beta$) for each of the wheelshafts 260a and 260b.

In one version, signals received on the data port contain information about a prevailing angle $\alpha$ relative to a horizontal plane for the leaf spring at a first wheelshaft 260a. The angle $\alpha$ is here determined by means of the angle sensor 230a.

In one version, signals received on the data port contain information about a prevailing angle $\beta$ relative to a horizontal plane for the leaf spring at a second wheelshaft 260b. The angle $\beta$ is here determined by means of the angle sensor 230b.

The signals received on the data port may for example be used by the device 500 to determine the angle indication A on the basis of the two angles ($\alpha$, $\beta$) determined and to determine the load F on the basis of said angle indication.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive nor to restrict the invention to the variants described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

**Claims**

1. A method for determination of load supported by a bogie configuration (299) of a vehicle (100; 110), where said bogie configuration (299) comprises twin wheelshafts (260a, 260b) resiliently supported by a spring device (220), comprising the step of

   - determining a spring state in the form of an angle ($\alpha$, $\beta$) for each of said wheelshafts (260a, 260b) as a basis for determination of said load (F), **characterised by** the steps of
   - determining an angle indication (A) based on the two angles ($\alpha$, $\beta$) thus determined, and
   - determining said load (F) on the basis of said angle indication (A).

2. A method according to claim 1, in which said angle indication (A) is an average value (Mean) of the two angles ($\alpha$, $\beta$) determined.

3. A method according to claim 1 or 2, in which said angle indication (A) is a weighted average value (WMean) of the two angles ($\alpha$, $\beta$) determined.

4. A method according to any one of the foregoing claims, further comprising the step of

   - determining for each of said wheelshafts (260a, 260b) an individual constant (k1, k2*) which denotes a leaf spring deflection in the form of a change of angle due to load.

5. A method according to any one of the foregoing claims, further comprising the step of

   - determining said load supported (F) on the basis of a leaf spring deflection (m) on an unladen vehicle.

6. A method according to claims 2, 4 and 5, comprising the step of

   - determining said load supported (F) on the basis of said angle indication (A) in the form of an average value

(Mean) of the two angles ($\alpha$, $\beta$) determined, said individual constants (k1, k2*) determined and said leaf spring deflection (m) on an unladen vehicle.

7. A method according to claim 1, **characterised by** the step of

- determining the total load (Ftot) supported by the vehicle by adding together a load supported by all of the bogie configurations and a load supported by the vehicle's other wheelshafts.

8. A device for determination of load supported (F) by a bogie configuration of a vehicle (100; 110), where said bogie configuration comprises twin wheelshafts (260a, 260b) resiliently supported by a spring device (220), comprising

- means (230a, 230b) for determining a spring state in the form of an angle ($\alpha$, $\beta$) for each of said wheelshafts (260a, 260b) as a basis for determination of said load (F),
**characterised by**
- means (200; 210) for determining an angle indication (A) based on the two angles ($\alpha$, $\beta$) thus determined, and
- means (200; 210) for determining said load (F) on the basis of said angle indication (A).

9. A device according to claim 8, in which said angle indication (A) is an average value (Mean) of the two angles ($\alpha$, $\beta$) determined.

10. A device according to claim 8 or 9, in which said angle indication (A) is a weighted average value (WMean) of the two angles ($\alpha$, $\beta$) determined.

11. A device according to any one of claims 8-10, further comprising

- means (230a, 230b,200, 210) for determining for each of said wheelshafts (260a, 260b) an individual constant (k1, k2*) which denotes a leaf spring deflection in the form of a change of angle due to load.

12. A device according to any one of claims 8-11, further comprising

- means (200; 210) for determining said load supported (F) on the basis of a leaf spring deflection (m) on an unladen vehicle.

13. A device according to claims 9, 11 and 12, comprising

- means (200; 210) for determining said load supported (F) on the basis of said angle indication (A) in the form of an average value (Mean) of the two angles ($\alpha$, $\beta$) determined, said individual constants (k1, k2*) determined and said leaf spring deflection (m) on an unladen vehicle.

14. A motor vehicle (100; 110) provided with at least two devices according to any one of claims 8-13.

15. A motor vehicle (100; 110) according to claim 14, which vehicle is any from among truck, bus or off-road vehicle.

16. A computer programme (P) for determination of load supported (F) by a bogie configuration of a vehicle (100; 110), where said bogie configuration comprises twin wheelshafts (260a, 260b) resiliently supported by a spring device (220), which programme (P) comprises programme code for causing an electronic control unit (200; 500) or another computer (210; 500) connected to the electronic control unit (200; 500) to perform steps according to any one of claims 1-7.

17. A computer programme product comprising a programme code stored on a computer-readable medium for performing method steps according to any one of claims 1-7 when said programme is run on an electronic control unit (200; 500) or another computer (210; 500) connected to the electronic control unit (200; 500).

Fig. 1

Fig. 2

Fig. 3a

Fig. 3b

Start

Determine load supported by a bogie configuration of a vehicle — s401

End

# Fig. 4a

Start

Initiate — s410

Determine individual constants — s420

Determine leaf spring deflection — s430

Determine an angle indication — s440

Determine load — s450

Determine total load — s460

Present the result — s470

End

# Fig. 4b

Fig. 5

**EUROPEAN SEARCH REPORT**

Application Number

EP 13 15 3172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/084824 A1 (BAYTECH KOREA INC [KR]; SHIN HAN-KI [KR]; KIM HAN JIN [KR]) 9 July 2009 (2009-07-09) * abstract; claim 1; figures 4,8,9 * * paragraphs [0070], [0107] * ----- | 1-17 | INV. G01G19/08 |

TECHNICAL FIELDS
SEARCHED        (IPC)

G01G

The present search report has been drawn up for all claims

| Place of search | Date of completion of the search | Examiner |
|---|---|---|
| The Hague | 8 May 2013 | Pugno, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

**ANNEX TO THE EUROPEAN SEARCH REPORT
ON EUROPEAN PATENT APPLICATION NO.**

EP 13 15 3172

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2013

| Patent document cited in search report | Publication date | Patent family member(s) | Publication date |
|---|---|---|---|
| WO 2009084824 A1 | 09-07-2009 | KR 20080009189 A<br>WO 2009084824 A1 | 25-01-2008<br>09-07-2009 |